# EUROPEAN PATENT SPECIFICATION

(11) **EP 3 876 336 B1**
(45) Date of publication and mention of the grant of the patent: **25.06.2025**
(21) Application number: 21154614.8
(22) Date of filing: 01.02.2021
(51) Int. Cl.: H01M 10/44, H01M 10/48, H01M 10/42

(54) **DISCHARGING METHOD, ELECTRONIC APPARATUS, AND STORAGE MEDIUM**
ENTLADEVERFAHREN, ELEKTRONISCHE VORRICHTUNG UND SPEICHERMEDIUM
PROCÉDÉ DE DÉCHARGE, APPAREIL ÉLECTRONIQUE ET SUPPORT D'ENREGISTREMENT

(30) Priority: 03.03.2020 CN 202010140276
(43) Date of publication of application: 08.09.2021
(73) Proprietor: Ningde Amperex Technology Limited, Ningde, Fujian 352100 (CN)
(72) Inventor: JIANG, Chenxi, Ningde City,, Fujian Province 352100 (CN); ZHANG, Yafei, Ningde City,, Fujian Province 352100 (CN); YANG, Fan, Ningde City,, Fujian Province 352100 (CN); YU, Hongming, Ningde City,, Fujian Province 352100 (CN)
(74) Representative: Klunker IP Patentanwälte PartG mbB

(56) References cited:
- JP-A- 2008 309 796
- US-A- 5 355 072

## Description

### TECHNICAL FIELD

This application relates to the field of battery technologies, and in particular, to a method of discharging a battery, an electronic apparatus, and a storage medium.

### BACKGROUND

In recent years, with popularity of smart phones, tablet computers, and wearable devices, requirements for volume-energy densities of batteries used by consumer electronic devices are increasingly high. With the advent of the electric vehicle market, batteries with high volume-energy densities and mass-energy densities are urgently needed. Silicon-based, tin-based, and other materials have become ideal materials for replacing carbon materials as negative active materials of batteries in the next generation of high energy density lithium-ion batteries due to their extremely high capacity and relatively low delithiation potential and lithiation potential.

In practical use of a lithium-ion battery, several consecutive shallow discharges (a second charge starts after a battery is not completely discharged) are very common. However, a solid phase diffusion coefficient of lithium ions in the silicon-based, tin-based, and other materials is lower than that in carbon materials. When such materials are used as the negative active materials, the lithium ions are easily enriched inside the active materials if the lithium-ion battery experiences long-term shallow discharges, so that discharge polarization of the lithium battery increases, and a discharge plateau decreases, with accelerated decay of cycle life.
US 5,355,072 A teaches a battery discharging apparatus, which is provided with a battery discharger and a control unit. The control unit is provided with a current sensor and a battery power capacity sensor. The control unit directs the discharger to recover battery capacity lost due to memory effect using a deep memory effect eliminating discharge.

### SUMMARY

In view of this, it is necessary to provide a discharging method, an electronic apparatus, and a storage medium, to prolong cycle life of a battery. The present invention is defined in the appended claims.

The present invention provides a method of discharging a battery, where the method includes: a monitoring step, monitoring a remaining capacity of the battery in each discharging process; a calculation step, calculating a cumulative remaining capacity and a capacity decay rate of the battery within a specified quantity of discharging times; and a deep discharge step, deeply discharging the battery in a next discharging process when the cumulative remaining capacity is greater than or equal to a first preset threshold or the capacity decay rate is greater than or equal to a second preset threshold, which is 50%.

According to some embodiments of this application, the specified quantity of discharging times is defined as N, where N is an integer greater than or equal to 1; and the method further includes: a repetition step, repeating the steps from the monitoring step to the deep discharge step after the (N+1)^{th} discharge.

According to some embodiments of this application, the specified quantity of discharging times is a preset quantity N of discharging times, where N is an integer greater than or equal to 1; and the method further includes: a repetition step, repeating performing the monitoring step to the deep discharge step after every N+1 times of discharge.

According to the present invention, the capacity decay rate is obtained through the following way: monitoring a first discharge capacity of the battery in the m^{th} discharging process, where m is an integer greater than 0; monitoring a second discharge capacity of the battery in the (m+N)^{th} discharging process; and calculating the capacity decay rate k, where k = (first discharge capacity - second discharge capacity) / rated capacity × 100%.

According to some embodiments of this application, the first preset threshold is greater than or equal to a rated capacity of the battery.

According to some embodiments of this application, the second preset threshold is greater than or equal to 5%.

According to some embodiments of this application, the step of deeply discharging the battery includes: in the discharging process, making a depth of discharge of the battery reach a preset discharge threshold, or making a voltage of the battery drop to a preset voltage.

According to some embodiments of this application, the preset discharge threshold ranges from 95% to 100%.

An embodiment of this application provides an electronic apparatus, where the electronic apparatus includes a battery and a processor, and the processor is configured to perform the foregoing method.

According to some embodiments of this application, negative electrode materials of the battery include an elementary substance of any one of silicon, tin, antimony, germanium, bismuth, or aluminum, or a compound thereof.

An embodiment of this application provides a storage medium, where at least one computer instruction is stored in the storage medium, and the computer instruction is loaded by a processor and is used to perform the foregoing method.

Embodiments of this application control the method of discharging a battery according to the remaining capacity of the battery in the discharging process. To be specific, the battery is deeply discharged in the next discharging process when the cumulative remaining capacity of the battery within the preset quantity of discharging times is greater than or equal to the first preset threshold, or the capacity decay rate of the battery in the discharging process is greater than or equal to the second preset threshold. Based on this method, when an elementary substance of silicon, tin, antimony, germanium, bismuth, aluminum, or the like, or an alloy or a compound thereof with a slow lithium ion diffusion rate and a high energy density is used as a negative electrode material of the battery, a phenomenon of rapid capacity decay or a pseudo representation of capacity decay caused by a long-term shallow discharge can be effectively avoided in practical applications, and consequently cycle life of the battery can be prolonged.

### BRIEF DESCRIPTION OF DRAWINGS

FIG. 1 is a schematic structural diagram of an electronic apparatus according to an embodiment of this application.
FIG. 2 is a flowchart of a method of discharging a battery according to an embodiment of this application.
FIG. 3 is a module diagram of a discharging system according to an embodiment of this application.

**Reference numerals of main elements:**

| | |
|---|---|
| Electronic apparatus | 1 |
| Discharging system | 10 |
| Processor | 11 |
| Battery | 12 |
| Monitoring module | 101 |
| Calculation module | 102 |
| Deep discharge module | 103 |

This application will be further described in detail with reference to the accompanying drawings in the following specific embodiments.

### DESCRIPTION OF EMBODIMENTS

The following clearly describes the technical solutions in the embodiments of this application with reference to the accompanying drawings in the embodiments of this application. Apparently, the described embodiments are a part rather than all of the embodiments of this application.

All other embodiments obtained by a person of ordinary skill in the art based on the embodiments of this application without creative efforts shall fall within the protection scope of this application.

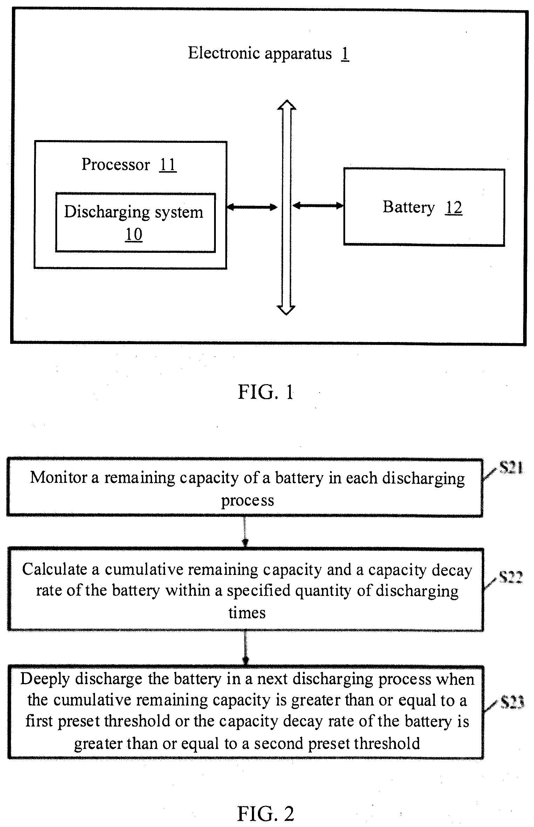

Referring to FIG. 1, a discharging system 10 is running within an electronic apparatus 1. The electronic apparatus 1 includes but is not limited to at least one processor 11 and a battery 12, and these elements may be connected through a bus, or may be directly connected.

It should be noted that FIG. 1 shows only an example of the electronic apparatus 1. In other embodiments, the electronic apparatus 1 may alternatively include more or fewer elements, or have different element configurations. The electronic apparatus 1 may be an electric motorcycle, an electric bicycle, an electric car, a mobile phone, a tablet computer, a personal digital assistant, a personal computer, or any other suitable rechargeable devices.

In one embodiment, the battery 12 is a rechargeable battery configured to supply electrical energy to the electronic apparatus 1. For example, the battery 12 may be a lithium-ion battery, a lithium polymer battery, a lithium-iron phosphate battery, or the like. The battery 12 includes at least one battery cell. The battery 12 may be charged repeatedly in a recyclable and rechargeable manner.

Although not shown, the electronic apparatus 1 may further include other components such as a wireless fidelity (Wi-Fi) unit, a Bluetooth unit, and a speaker. Details are not described herein.

FIG. 2 is a flowchart of a method of discharging a battery according to an embodiment of this application. The method of discharging a battery may include the following steps.

Step S21: Monitor a remaining capacity of the battery in each discharging process.

To determine a state (for example, shallow or deep discharge) of the battery in a discharging process, the remaining capacity of the battery in each discharging process needs to be monitored. The state of the battery in the discharging process may be determined based on a depth of discharge of the battery. For example, when the depth of discharge of the battery is less than or equal to a first preset threshold (for example, 20%), the battery in the discharging process is in a shallow discharge state; and when the depth of discharge of the battery is greater than or equal to a second preset threshold (50%), the battery in the discharging process is in deep discharge state.

The depth of discharge (depth of discharge, DOD) is a parameter representing a discharge state of the battery, and equal to a percentage of an actual discharge capacity to a rated capacity. The actual discharge capacity is equal to a difference between the rated capacity and the remaining capacity.

In this embodiment, negative active materials of the battery at least include negative electrode materials with a high energy density formed by an elementary substance selected from any one of silicon, tin, antimony, germanium, bismuth, aluminum, or the like, or an alloy or a compound thereof.

Step S22: Calculate a cumulative remaining capacity and a capacity decay rate of the battery within a specified quantity of discharging times. The specified quantity of discharging times is defined as N, where N is an integer greater than or equal to 1. In an embodiment, the specified quantity of discharging times is not preset, but a quantity of natural discharging times when a condition that one of the capacity decay rate or the cumulative remaining capacity reaches a preset threshold is met. In this case, deeply discharging the battery can be initiated in a next discharge. In other embodiments, the specified quantity of discharging times is a preset quantity of discharging times. To be specific, the capacity decay rate of the battery and the cumulative remaining capacity of the battery within the specified quantity of discharging times are calculated within the preset quantity of discharging times.

For example, when the preset quantity of discharging times is 4, the cumulative remaining capacity of the battery is calculated within the 4 times of discharge. For example, the remaining capacity of the battery is 20% after the first discharge, 40% after the second discharge, 10% after the third discharge, and 40% after the fourth discharge. Therefore, the cumulative remaining capacity of the battery within the 4 times of discharge is 110%. In some embodiments, N is an integer greater than or equal to 5. In some other embodiments, N is an integer greater than or equal to 10.

The capacity decay rate is obtained through the following way: (1) monitoring a first discharge capacity of the battery in the m^{th} discharging process, where m is an integer greater than 0; (2) monitoring a second discharge capacity of the battery in the (m+N)^{th} discharging process; and (3) calculating the capacity decay rate k, where k = (first discharge capacity - second discharge capacity) / rated capacity × 100%.

Step S23: Deeply discharge the battery in a next discharging process when the cumulative remaining capacity is greater than or equal to a first preset threshold or the capacity decay rate of the battery is greater than or equal to a second preset threshold.

To alleviate the capacity decay of the battery caused in a long-term shallow discharging process of the battery, deeply discharging the battery may be performed in the next discharging process when the cumulative remaining capacity is greater than or equal to a first preset threshold or the capacity decay rate is greater than or equal to a second preset threshold. Through deep discharge, all lithium ions enriched inside a negative active particle material (for example, silicon particles) can be delithiated, preventing the lithium ions from being enriched inside the negative active particle material (for example, silicon particles), so that the lithium ions can be enriched on a surface of the negative active particle material. This increases the discharge plateau, can make a discharge capacity of the battery after deep discharge restore to the discharge capacity before the first discharge, and can eliminate polarization of the battery, thereby prolonging cycle life of the battery.

It should be noted that the discharge plateau refers to a portion of a discharge curve where a voltage remains substantially horizontal. A higher, longer, and more stable discharge plateau corresponds to better discharge performance of the battery.

Specifically, the step of deeply discharging the battery includes: in the discharging process, making the depth of discharge of the battery reach a preset discharge threshold, or making a voltage of the battery drop to a preset voltage. In an embodiment, the preset discharge threshold ranges from 95% to 100%.

In this embodiment, the first preset threshold is greater than or equal to the rated capacity of the battery. The second preset threshold is greater than or equal to 5%.

Preferably, in this application, the method further includes the following step: continuing to repeat the foregoing steps from step S21 to step S23 after the (N+1)^{th} discharge when the specific quantify N of discharging times is a quantity of natural discharging times when a condition that one of the capacity decay rate or the cumulative remaining capacity reaches a preset threshold is met.

When the specified quantity N of discharging times is a preset quantity of discharging times, continue to repeat the foregoing steps from step S21 to step S23 after every N+1 times of discharge. For example, by using m=1 and N=10 for an example, starting from the first (that is, m=1) discharging, the remaining capacity after each discharge is monitored, and when a deep discharge condition is met after the 10^{th} discharge (that is, a cumulative remaining capacity is greater than or equal to a first preset threshold or the capacity decay rate is greater than or equal to a second preset threshold), the deep method described above is then applied to the battery in the 11^{th} discharge. Subsequently, the foregoing steps from the monitoring step to the deep discharge step are performed from the 12^{th} discharge to the 22^{nd} discharge, and so on from the 23^{rd} discharge to the 33^{rd} discharge.

To make the objectives, technical solutions, and technical effects of this application clearer, the following further describes this application in detail with reference to the accompanying drawings and examples.

### Comparative Example 1:

Battery preparation process: A negative electrode plate included a negative active material mixing silicon and graphite (92%, a capacity of 500 mAh/g), 5% PAA (polyacrylic acid), 2% conductive carbon black, and 1% CMC (sodium carboxymethyl cellulose). A positive electrode plate included 96.5% lithium cobalt oxide (a positive active material), 2% PVDF (polyvinylidene fluoride), and 1.5% conductive carbon black. The positive electrode plate, a separator, and the negative electrode plate were sequentially stacked or wound, and after the electrolyte solution was injected, a soft-packaged lithium-ion secondary battery with a thickness of 3.3 mm, a width of 40 mm, and a length of 95 mm was prepared. At 25°C (ambient temperature), the battery was discharged with a constant current of 0.5C. A rated capacity obtained from the test was 2200 mAh during battery voltage drop from 4.4V to 2.75V.

### Ambient temperature: 25°C;

Discharging process: The battery was discharged with a constant current of 0.5C, and a remaining capacity of the battery was 10%. In this case, the remaining capacity was 220 mAh, and a cut-off voltage was 3.2V. Then with an initial voltage 4.4V of the battery remained unchanged, and 3.2V as a lower cut-off voltage, the foregoing discharging process was repeated for 100 cycles, and a capacity decay rate of the battery was calculated in each discharge cycle.

### Comparative Example 2:

A lithium-ion secondary battery was prepared according to the method of Comparative Example 1.

### Ambient temperature: 25°C;

Discharging process: The battery was discharged with a constant current of 0.5C, consecutive shallow discharges were performed, and a remaining capacity of the battery was 20% in the first discharging process. In this case, the remaining capacity was 440 mAh, and a cut-off voltage was 3.5V. Then with an initial voltage 4.4V of the battery remained unchanged, and 3.5V as a lower cut-off voltage, the foregoing discharging process was repeated for 100 cycles, and a capacity decay rate of the battery was calculated in each cycle.

### Comparative Example 3:

A lithium-ion secondary battery was prepared according to the method of Comparative Example 1.

### Ambient temperature: 25°C;

Discharging process: The battery was discharged with a constant current of 0.5C, consecutive shallow discharges were performed, and a remaining capacity of the battery was 50% in the first discharging process. In this case, the remaining capacity was 1100 mAh, and a cut-off voltage was 3.82V. Then with an initial voltage 4.4V of the battery remained unchanged, and 3.82V as a lower cut-off voltage, the foregoing discharging process was repeated for 100 cycles, and a capacity decay rate of the battery was calculated in each cycle.

### Comparative Example 4:

A battery was prepared by using the preparation method of Comparative Example 1. Differences lay in that a negative electrode plate included a negative active material mixing silicon and graphite (86%, a capacity of 1000 mAh/g), 10% PAA (polyacrylic acid), 3% conductive carbon black, and 1% CMC (sodium carboxymethyl cellulose), and a rated capacity of the obtained battery was 2500 mAh.

### Ambient temperature: 25°C;

Discharging process: The battery was discharged with a constant current of 0.5C, consecutive shallow discharges were performed, and a remaining capacity of the battery was 10% in the first discharging process. In this case, the remaining capacity was 250 mAh, and a cut-off voltage was 3.13V. Then with an initial voltage 4.4V of the battery remained unchanged, and 3.13V as a lower cut-off voltage, the foregoing discharging process was repeated for 100 cycles, and a capacity decay rate of the battery was calculated in each cycle.

### Comparative Example 5:

A lithium-ion secondary battery was prepared according to the method of Comparative Example 4.

### Ambient temperature: 25°C;

Discharging process: The battery was discharged with a constant current of 0.5C, consecutive shallow discharges were performed, and a remaining capacity of the battery was 20% in the first discharging process. In this case, the remaining capacity was 500 mAh, and a cut-off voltage was 3.4V. Then with an initial voltage 4.4V of the battery remained unchanged, and 3.4V as a lower cut-off voltage, the foregoing discharging process was repeated for 100 cycles, and a capacity decay rate of the battery was calculated in each cycle.

### Comparative Example 6:

A lithium-ion secondary battery was prepared according to the method of Comparative Example 4.

### Ambient temperature: 25°C;

Discharging process: The battery was discharged with a constant current of 0.5C, consecutive shallow discharges were performed, and a remaining capacity of the battery was 50% in the first discharging process. In this case, the remaining capacity was 1250 mAh, and a cut-off voltage was 3.7V. Then with an initial voltage 4.4V of the battery remained unchanged, and 3.7V as a lower cut-off voltage, the foregoing discharging process was repeated for 100 cycles, and a capacity decay rate of the battery was calculated in each cycle.

### Example 1:

A lithium-ion secondary battery was prepared according to the method of Comparative Example 1.

### Ambient temperature: 25°C;

Discharging process: The battery was discharged with a constant current of 0.5C, consecutive shallow discharges were performed, and a remaining capacity of the battery was 10% in each discharging process, in other words, a voltage of the battery was dropped from 4.4V to 3.2V; after the discharging process was repeated for 10 cycles, a cumulative remaining capacity of the battery reached 100%; and the battery was deeply discharged once in the 11^{th} discharge cycle (that is, a depth of discharge of the battery in this discharging process reached 95%, or the voltage of the battery was dropped to 3V). Then the foregoing steps were repeated for 100 cycles to test a capacity decay rate of the battery.

### Example 2:

A lithium-ion secondary battery was prepared according to the method of Comparative Example 1.

### Ambient temperature: 25°C;

Discharging process: The battery was discharged with a constant current of 0.5C, consecutive shallow discharges were performed, and a remaining capacity of the battery was 20% in each discharging process, in other words, a voltage of the battery was dropped from 4.4V to 3.5V; after the discharging process was repeated for 5 cycles, a cumulative remaining capacity of the battery reached 100%; and the battery was deeply discharged once in the 6^{th} discharge cycle (that is, a depth of discharge of the battery in this discharging process reached 95%, or the voltage of the battery was dropped to 3V). Then the foregoing steps were repeated for 100 cycles to test a capacity decay rate of the battery.

### Example 3:

A lithium-ion secondary battery was prepared according to the method of Comparative Example 1.

### Ambient temperature: 25°C;

Discharging process: The battery was discharged with a constant current of 0.5C, consecutive shallow discharges were performed, and a remaining capacity of the battery was 50% in each discharging process, in other words, a voltage of the battery was dropped from 4.4V to 3.82V; after the discharging process was repeated for 2 cycles, a cumulative remaining capacity of the battery reached 100%; and the battery was deeply discharged once in the 3^{rd} discharge cycle (that is, a depth of discharge of the battery in this discharging process reached 95%, or the voltage of the battery was dropped to 3V). Then the foregoing steps were repeated for 100 cycles to test a capacity decay rate of the battery.

### Example 4:

A lithium-ion secondary battery was prepared according to the method of Comparative Example 1.

### Ambient temperature: 25°C;

Discharging process: The battery was discharged with a constant current of 0.5C, consecutive shallow discharges were performed, and a remaining capacity of the battery was 5% in each discharging process, in other words, a voltage of the battery was dropped from 4.4V to 3V. Then the foregoing discharging process was repeated for 100 cycles to test a capacity decay rate of the battery.

### Example 5:

A lithium-ion secondary battery was prepared according to the method of Comparative Example 4.

### Ambient temperature: 25°C;

Discharging process: The battery was discharged with a constant current of 0.5C, consecutive shallow discharges were performed, and a remaining capacity of the battery was 10% in the first discharging process, in other words, a voltage of the battery was dropped from 4.4V to 3.13V; after the discharging process was repeated for 10 cycles, a cumulative remaining capacity of the battery reached 100%; and the battery was deeply discharged once in the 11^{th} discharge cycle (that is, a depth of discharge of the battery in this discharging process reached 95%, or the voltage of the battery was dropped to 3V). Then the foregoing steps were repeated for 100 cycles to test a capacity decay rate of the battery.

### Example 6:

A lithium-ion secondary battery was prepared according to the method of Comparative Example 4.

### Ambient temperature: 25°C;

Discharging process: The battery was discharged with a constant current of 0.5C, consecutive shallow discharges were performed, and a remaining capacity of the battery was 20% in each discharging process, in other words, a voltage of the battery was dropped from 4.4V to 3.4V; after the discharging process was repeated for 5 cycles, a cumulative remaining capacity of the battery reached 100%; and the battery was deeply discharged once in the 6^{th} discharge cycle (that is, a depth of discharge of the battery in this discharging process reached 95%, or the voltage of the battery was dropped to 3V). Then the foregoing steps were repeated for 100 cycles to test a capacity decay rate of the battery.

### Example 7:

A lithium-ion secondary battery was prepared according to the method of Comparative Example 4.

### Ambient temperature: 25°C;

Discharging process: The battery was discharged with a constant current of 0.5C, consecutive shallow discharges were performed, and a remaining capacity of the battery was 50% in each discharging process, in other words, a voltage of the battery was dropped from 4.4V to 3.7V; after the discharging process was repeated for 2 cycles, a cumulative remaining capacity of the battery reached 100%; and the battery was deeply discharged once in the third discharge cycle (that is, a depth of discharge of the battery in this discharging process reached 95%, or the voltage of the battery was dropped to 3V). Then the foregoing steps were repeated for 100 cycles to test a capacity decay rate of the battery.

### Example 8:

A lithium-ion secondary battery was prepared according to the method of Comparative Example 4.

### Ambient temperature: 25°C;

Discharging process: The battery was discharged with a constant current of 0.5C, consecutive shallow discharges were performed, and a remaining capacity of the battery was 5% in each discharging process, in other words, a voltage of the battery was dropped from 4.4V to 3V.

Then the foregoing discharging process was repeated for 100 cycles to test a capacity decay rate of the battery.

**In** the process of repeating 100 discharge cycles in the foregoing Comparative Example 1 to Comparative Example 6 and Example 1 to Example 8, the capacity decay rates of the battery in the 10^{th} cycle, the 50^{th} cycle, and the 100^{th} cycle were recorded, with records shown in Table 1 below.

**Table 1 Capacity decay rates of a battery in different discharge cycles**

| | Capacity decay rate | | |
|---|---|---|---|
| | 10^{th} cycle | 50^{th} cycle | 100^{th} cycle |
| Comparative Example 1 | 4.4% | 19.7% | 24.3% |
| Comparative Example 2 | 7.6% | 28.5% | 35.8% |
| Comparative Example 3 | 15.8% | 37.2% | 46.5% |
| Comparative Example 4 | 4.9% | 22.3% | 28.9% |
| Comparative Example 5 | 8.2% | 30.1% | 38.4% |
| Comparative Example 6 | 15.3% | 41.1% | 50.3% |
| Example 1 | 4.4% | 5.8% | 7.3% |
| Example 2 | 4.3% | 5.9% | 7.7% |
| Example 3 | 3.9% | 6.7% | 7.9% |
| Example 4 | 1.1% | 4.8% | 8.1% |
| Example 5 | 4.9% | 6.2% | 7.8% |
| Example 6 | 4.7% | 6.4% | 8.1% |
| Example 7 | 4.3% | 6.9% | 8.4% |
| Example 8 | 1.9% | 5.8% | 9.1% |

It can be learned from Table 1 that, by comparing the Comparative Example 1 and Example 1, it can be found that the battery in Comparative Example 1 was always in a shallow discharge state, and the capacity decay rate reached 19.7% after 50 cycles, and 24.3% after 100 cycles; while deep discharge was performed once every 10 cycles in Comparative Example 1, the capacity decay rate was only 5.8% after 50 cycles, and 7.3% after 100 cycles.

It can be seen from Comparative Examples 1 to 3 and Examples 1 to 3 that, more remaining capacity after each discharge cycle led to a faster capacity decay, and improvement by deep discharge to the capacity decay rate in discharge cycling was more obvious. It should be noted that capacity losses caused by these shallow discharges were not real losses, but were due to the lithium ions enriched inside the active material caused by a long-term shallow discharge, leading to greater discharge polarization. These capacity losses were still recoverable after deep discharge.

This application controls how a battery discharges based on the remaining capacity of the battery in the discharging process, alleviating fast capacity decay caused by a long-term shallow discharge in practical applications when a negative active material with a slow lithium ion diffusion rate and a high energy density is used as a negative electrode material of the battery. In addition to controlling the remaining capacity of the battery in the discharging process, a lower discharge cut-off voltage and a smaller discharge rate may also be controlled, with the same essence, both of which are to eliminate the polarization generated during the use of the battery, should be able to achieve the same effect, and therefore should also fall within the protection scope of the present application.

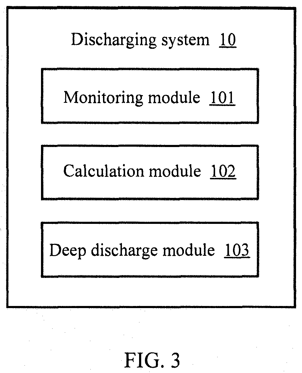

With reference to FIG. 3, in this embodiment, the discharging system 10 may be divided into one or more modules. The one or more modules may be stored in the processor 11, and executed by the processor 11 to perform the method according to the embodiments of this application. The one or more modules may be a series of computer program instruction segments capable of completing specific functions, and the instruction segments are used to describe an execution process of the discharging system 10 in the electronic apparatus 1. For example, the discharging system 10 may be divided into a monitoring module 101, a calculation module 102, and a deep discharge module 103 in FIG. 3.

The monitoring module 101 is configured to monitor a remaining capacity of a battery in each discharging process; the calculation module 102 is configured to calculate the cumulative remaining capacity and the capacity decay rate of the battery within the specified quantity of discharging times; and the deep discharge module 103 is configured to deeply discharge the battery in a next discharging process when the cumulative remaining capacity is greater than or equal to a first preset threshold or the capacity decay rate is greater than or equal to a second preset threshold.

The discharging system 10 can control the remaining capacity of the battery 12 in the discharging process, alleviating fast capacity decay caused by a long-term shallow discharge in practical applications when a negative active material with a slow lithium ion diffusion rate and a high energy density is used as a negative electrode material of the battery. For specific content, refer to the embodiments of the foregoing method of discharging a battery. Details are not described herein again.

In an embodiment, the processor 11 may be a central processing unit (CPU), or may be a general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor 11 may be any other conventional processor or the like.

When a module in the discharging system 10 is implemented in a form of a software functional unit and sold or used as an independent product, the module may be stored in a computer-readable storage medium. Based on such an understanding, all or some of the processes of the method in the foregoing embodiments of this application may also be implemented by a computer program instructing relevant hardware. The computer program may be stored in a computer-readable storage medium. When the computer program is executed by a processor, the steps of the foregoing method embodiments can be implemented. The computer program includes computer program codes. The computer program codes may be in a source code form, an object code form, an executable file form, some intermediate forms, or the like. The computer-readable medium may include any entity or apparatus, a recording medium, a USB disk, a mobile hard disk, a magnetic disk, an optical disk, a computer memory, a read-only memory (ROM), a random access memory (RAM), an electric carrier signal, a telecommunication signal, a software distribution medium, and the like capable of carrying the computer program codes. It should be noted that the content contained in the computer-readable medium may be appropriately added or removed in accordance with the requirements of legislation and patent practice in a jurisdiction. For example, in accordance with the legislation and patent practice in some jurisdictions, the computer-readable medium does not include electrical carrier signals and telecommunication signals.

It can be understood that, the division of modules described above is a division of logical functions. Other division manners may be available in actual embodiments. In addition, function modules in the embodiments of this application may be integrated into a same processing unit, or each of the modules may exist alone physically, or two or more modules are integrated into a same unit. The integrated module may be implemented in a form of hardware, or may be implemented in a form of hardware and a software function module.

In another embodiment, the electronic apparatus 1 may further include a memory (not shown in the figure). The one or more modules may alternatively be stored in the memory and executed by the processor 11. The memory may be an internal memory of the electronic apparatus 1, that is, a memory built in the electronic apparatus 1. In other embodiments, the memory may alternatively be an external memory of the electronic apparatus 1, that is, a memory externally connected to the electronic apparatus 1.

In some embodiments, the memory is configured to store program codes and various data, for example, program codes of the discharging system 10 installed in the electronic apparatus 1, and complete access to the program or data at a high speed and automatically during the operation of the electronic apparatus 1.

The memory may include a random access memory, or may include a non-volatile memory, for example, a hard disk, a memory, a plug-in hard disk, a smart media card (SMC), a secure digital (SD) card, a flash card, at least one magnetic disk storage device, a flash memory device, or other volatile solid-state storage devices.

## Claims

1. A method of discharging a battery, **characterized in that** the method comprises:
a monitoring step, monitoring a remaining capacity of the battery in each discharging process;
a calculation step, calculating a cumulative remaining capacity and a capacity decay rate of the battery within a specified quantity of discharging times; and
a deep discharge step, deeply discharging the battery in a next discharging process when the cumulative remaining capacity is greater than or equal to a first preset threshold or the capacity decay rate is greater than or equal to a second preset threshold, which is 50%, wherein the capacity decay rate is obtained through the following steps:
monitoring a first discharge capacity of the battery in the m^{th} discharging process, wherein m is an integer greater than 0;
monitoring a second discharge capacity of the battery in the (m+N)^{th} discharging process, wherein N is an integer greater than or equal to 1; and
calculating the capacity decay rate k, wherein k = (first discharge capacity - second discharge capacity) / rated capacity × 100%.

2. The method according to claim 1, **characterized in that** the specified quantity of discharging times is defined as N, N is an integer greater than or equal to 1, and the method further comprises:
a repetition step, repeating the steps from the monitoring step to the deep discharge step after the (N+1)^{th} discharge.

3. The method according to claim 1, **characterized in that** the specified quantity of discharging times is a preset quantity N of discharging times, wherein N is an integer greater than or equal to 1; and the method further comprises:
a repetition step, repeating performing the monitoring step to the deep discharge step after every N+1 times of discharge.

4. The method according to any one of claims 1 to 3, **characterized in that** the first preset threshold is greater than or equal to a rated capacity of the battery.

5. The method according to any one of claims 1 to 4, **characterized in that** the second preset threshold is greater than or equal to 5%.

6. The method according to any one of claims 1 to 5, **characterized in that** the step of deeply discharging the battery comprises: in the discharging process, making a depth of discharge of the battery reach a preset discharge threshold, or making a voltage of the battery drop to a preset voltage.

7. The method according to claim 6, **characterized in that** the preset discharge threshold ranges from 95% to 100%.

8. An electronic apparatus, **characterized in that** the electronic apparatus comprises:
a battery (12); and
a processor, configured to perform the method of discharging the battery (12) according to any one of claims 1 to 7.

9. The electronic apparatus according to claim 8, **characterized in that** negative electrode materials of the battery (12) comprises an elementary substance of any one of silicon, tin, antimony, germanium, bismuth, or aluminum, or a compound thereof.

10. A storage medium, **characterized in that** at least one computer instruction is stored in the storage medium, and the instruction, when loaded by a processor, is configured to perform the method of discharging the battery (12) according to any one of claims 1 to 7.

## Patentansprüche

1. Verfahren zum Entladen einer Batterie, **dadurch gekennzeichnet, dass** das Verfahren umfasst:
einen Überwachungsschritt, der eine verbleibende Kapazität der Batterie in jedem Entladevorgang überwacht;
einen Berechnungsschritt, der eine kumulative verbleibende Kapazität und eine Kapazitätsabnahmerate der Batterie innerhalb einer spezifizierten Menge von Entladezeiten berechnet; und
einen Tiefentladungsschritt, der die Batterie in einem nächsten Entladevorgang tief entlädt, wenn die kumulative verbleibende Kapazität größer oder gleich einem ersten voreingestellten Schwellenwert ist oder die Kapazitätsabnahmerate größer oder gleich einem zweiten voreingestellten Schwellenwert ist, der 50% beträgt, wobei die Kapazitätsabnahmerate durch die folgenden Schritte erhalten wird:
Überwachen einer ersten Entladekapazität der Batterie im m-ten Entladevorgang, wobei m eine ganze Zahl größer als 0 ist;
Überwachen einer zweiten Entladekapazität der Batterie im (m+N)-ten Entladevorgang, wobei N eine ganze Zahl größer als oder gleich 1 ist; und
Berechnen der Kapazitätsabnahmerate k, wobei k = (erste Entladekapazität - zweite Entladekapazität) / Nennkapazität × 100%.

2. Verfahren nach Anspruch 1, **dadurch gekennzeichnet, dass** die spezifizierte Anzahl von Entladungszeiten als N definiert ist, wobei N eine ganze Zahl größer oder gleich 1 ist, und das Verfahren ferner umfasst:
einen Wiederholungsschritt, in dem die Schritte vom Überwachungsschritt bis zum Tiefentladungsschritt nach der (N+1)-ten Entladung wiederholt werden.

3. Verfahren nach Anspruch 1, **dadurch gekennzeichnet, dass** die spezifizierte Menge an Entladungszeiten eine voreingestellte Menge N an Entladungszeiten ist, wobei N eine ganze Zahl größer oder gleich 1 ist; und das Verfahren ferner umfasst:
einen Wiederholungsschritt, der die Durchführung des Überwachungsschritts bis zum Tiefentladungsschritt nach jeder N+1-ten Entladung wiederholt.

4. Verfahren nach einem der Ansprüche 1 bis 3, **dadurch gekennzeichnet, dass** der erste voreingestellte Schwellenwert größer als oder gleich einer Nennkapazität der Batterie ist.

5. Verfahren nach einem der Ansprüche 1 bis 4, **dadurch gekennzeichnet, dass** der zweite voreingestellte Schwellenwert größer als oder gleich 5 % ist.

6. Verfahren nach einem der Ansprüche 1 bis 5, **dadurch gekennzeichnet, dass** der Schritt der Tiefentladung der Batterie umfasst: beim Entladevorgang wird dafür gesorgt, dass eine Entladetiefe der Batterie einen voreingestellten Entladeschwellenwert erreicht, oder eine Spannung der Batterie wird auf eine voreingestellte Spannung abgesenkt.

7. Verfahren nach Anspruch 6, **dadurch gekennzeichnet, dass** der voreingestellte Entladeschwellenwert im Bereich von 95% bis 100% liegt.

8. Elektronisches Gerät, **dadurch gekennzeichnet, dass** das elektronische Gerät umfasst:
eine Batterie (12); und
einen Prozessor, der so konfiguriert ist, dass er das Verfahren zum Entladen der Batterie (12) gemäß einem der Ansprüche 1 bis 7 durchführt.

9. Elektronisches Gerät nach Anspruch 8, **dadurch gekennzeichnet, dass** negative Elektrodenmaterialien der Batterie (12) eine elementare Substanz aus einem aus Silizium, Zinn, Antimon, Germanium, Wismut oder Aluminium oder eine Verbindung davon umfassen.

10. Speichermedium, **dadurch gekennzeichnet, dass** mindestens ein Computerbefehl in dem Speichermedium gespeichert ist, und der Befehl, wenn er von einem Prozessor geladen wird, so konfiguriert ist, dass er das Verfahren zum Entladen der Batterie (12) nach einem der Ansprüche 1 bis 7 durchführt.

## Revendications

1. Procédé destiné à décharger une batterie, **caractérisé en ce que** le procédé comprend :
les étapes suivantes :
une étape de surveillance, surveillant une capacité restante de la batterie dans chaque processus de décharge ;
une étape de calcul, calculant une capacité restante cumulée et un taux de décroissance de capacité de la batterie dans les limites d'une quantité spécifiée de temps de décharge, et
une étape de décharge profonde, déchargeant profondément la batterie dans un processus de décharge suivant lorsque la capacité restante cumulée est supérieure ou égale à un premier seuil préréglé, ou lorsque le taux de décroissance de capacité est supérieur ou égal à un second seuil préréglé, lequel est de 50 %, dans lequel le taux de décroissance de capacité est obtenu par les étapes suivantes :
surveiller une première capacité de décharge de la batterie lors du m^{ième} processus de décharge, dans lequel m est un entier supérieur à 0 ;
surveiller une seconde capacité de décharge de la batterie lors du (m+N)^{ième} processus de décharge, dans lequel N est un entier supérieur ou égal à 1, et
calculer le taux de décroissance de capacité k, dans lequel k = (première capacité de décharge - seconde capacité de décharge) / capacité nominale x 100 %.

2. Procédé selon la revendication 1, **caractérisé en ce que** la quantité spécifiée des temps de décharge est définie comme N ; N est un entier supérieur ou égal à 1, et le procédé comprend en outre l'étape suivante :
une étape de répétition, répétant les étapes de l'étape de surveillance à l'étape de décharge profonde après la (N+1)^{ième} décharge.

3. Procédé selon la revendication 1, **caractérisé en ce que** la quantité spécifiée des temps de décharge est une quantité préréglée N de temps de décharge, dans lequel N est un entier supérieur ou égal à 1, et le procédé comprend en outre l'étape suivante :
une étape de répétition, répétant la réalisation de l'étape de surveillance à l'étape de décharge profonde après chaque N+1 fois de décharge.

4. Procédé selon l'une quelconque des revendications 1 à 3, **caractérisé en ce que** le premier seuil préréglé est supérieur ou égal à une capacité nominale de la batterie.

5. Procédé selon l'une quelconque des revendications 1 à 4, **caractérisé en ce que** le second seuil préréglé est supérieur ou égal à 5 %.

6. Procédé selon l'une quelconque des revendications 1 à 5, **caractérisé en ce que** l'étape de décharge profonde de la batterie comprend les étapes suivantes : lors du processus de décharge, faire en sorte qu'une profondeur de décharge de la batterie atteigne un seuil de décharge préréglé, ou faire en sorte qu'une tension de la batterie chute jusqu'à une tension préréglée.

7. Procédé selon la revendication 6, **caractérisé en ce que** le seuil de décharge préréglé est compris dans une plage allant de 95 % à 100 %.

8. Appareil électronique, **caractérisé en ce que** l'appareil électronique comprend :
une batterie (12), et
un processeur, configuré pour réaliser le procédé de décharge de la batterie (12) selon l'une quelconque des revendications 1 à 7.

9. Appareil électronique selon la revendication 8, **caractérisé en ce que** des matériaux d'électrode négative de la batterie (12) comprennent une substance élémentaire parmi l'un quelconque des éléments suivants : silicium, étain, antimoine, germanium, bismuth, ou aluminium, ou un composé de ceux-ci.

10. Support d'enregistrement, **caractérisé en ce qu'**au moins une instruction informatique est stockée dans le support de stockage, et lorsqu'elle est chargée par un processeur, l'instruction est configurée pour réaliser le procédé de décharge de la batterie (12) selon l'une quelconque des revendications 1 à 7.
